# NEUE EUROPÄISCHE PATENTSCHRIFT

(11) **EP 1 216 856 B2**
(45) Veröffentlichungstag und Bekanntmachung des Hinweises auf die Entscheidung über den Einspruch: **06.05.2009**
(45) Hinweis auf die Patenterteilung: 24.08.2005
(21) Anmeldenummer: 01130371.6
(22) Anmeldetag: 20.12.2001
(51) Int. Cl.: B60D 1/06, B60D 1/46, A01B 59/042, B60D 1/54

(54) **Anhängevorrichtung für ein Arbeitsfahrzeug**
Trailer coupling for a work vehicle
Attelage de remorque pour un véhicule de travail

(30) Priorität: 23.12.2000 DE 10065161
(43) Veröffentlichungstag der Anmeldung: 26.06.2002
(60) Teilanmeldung: 05105324.7
(73) Patentinhaber: DEERE & COMPANY, Moline, Illinois 61265-8098 (US)
(72) Erfinder: Zahn, Werner, 67454 Hassloch (DE)
(74) Vertreter: Magin, Ludwig Bernhard

(56) Entgegenhaltungen:
- EP-A- 0 695 655
- FR-A- 2 201 815
- GB-A- 2 295 367
- US-A- 2 966 369
- US-A- 3 826 517
- US-A- 4 199 167
- US-A- 4 340 240
- 'DESIGNS AND SPECIFICATIONS FOR A STANDART TRAILER & HITCH FOR LABOUR-BASED WORKS' ASIST INFORMATION SERVICES 1997, NAIROBI KENYA, Seiten 1 - 37

## Beschreibung

Die Erfindung betrifft ein Anhängesystem für ein landwirtschaftliches oder industrielles Fahrzeug mit einem in vertikaler Richtung zwischen einer oberen Transportstellung und einer abgesenkten Stellung schwenkbar am Fahrzeugrumpf angelenkten Rahmenteil. Das freie, verschwenkbare Ende des Rahmenteils nimmt ein vorstehendes, unmittelbar oder mittelbar vom Rahmenteil geführtes und in wenigstens einer Fahrzeuglängsposition arretierbares Kupplungsteil auf. Derartige Anhängesysteme werden üblicherweise mit Pick-up Hitch bezeichnet.

Ein derartiges Anhängesystem dem Oberbegriff entsprechend ist durch die EP-A-0 695 655 bekannt geworden, die sich auf eine unmittelbare Festlegung zwischen einem mit Zugelement bezeichnetem Kupplungsteil und dem Fahrzeugrumpf bezieht. Das dort beschriebene Zugelement ist entweder als übliches Zugpendel ausgebildet oder es enthält einen üblichen nach oben stehenden Hitch-Haken (ISO 6489-1), der als Zug- oder Trageinrichtung für die Anhängeröse eines angehängten Gerätes dient.

Die Stützlast am Zug- oder Hitch-Haken ist jedoch begrenzt und entspricht nicht immer den Anforderungen der Praxis. So darf bei landwirtschaftlichen Traktoren die Stützlast am Hitch-Haken 30 kN (etwa 3 t) nicht überschreiten. Diese Stützlast begrenzt bei intensiver Transportarbeit die Belastbarkeit des Fahrzeugs, obwohl durch die tiefliegende Position des Anhängesystems am Traktor eine höhere Belastung grundsätzlich möglich wäre. Des weiteren wird durch die hohen vertikalen Stützlasten in der Auflagefläche zwischen dem Hitch-Haken und der Anhängeröse ein relativ hoher Verschleiß erzeugt, der wegen der bestehenden Geometrie der Bauteile, die im eingekuppelten Zustand eine Relativbewegung zueinander zulassen, nicht auf befriedigende Werte begrenzt werden kann.

Durch die WO-A-00/66376 ist eine Kupplungsvorrichtung zwischen einem Zugfahrzeug und einem Anhänger bekannt geworden, bei dem eine Kupplungskugel auf einem Kupplungsträger angeordnet ist.

Der Kupplungsträger ist mit der Kupplungskugel starr am Fahrzeugchassis befestigt. Mit dieser Kupplungsvorrichtung ist der Kuppelvorgang jedoch schwierig, denn einerseits kann die Bedienungsperson von der Fahrerkabine aus den Kuppelpunkt nicht einsehen. Es ist daher eine Hilfsperson erforderlich, oder die Bedienungsperson muss zum Kuppeln mehrfach die Fahrerkabine verlassen. Andererseits wird insbesondere bei schweren Geräten eine Hubeinrichtung für die Deichsel des Anhängers benötigt, um diese auf die Höhe der Kupplungskugel zu bringen.

Aus der US-A-2 966 369 ist eine weitere Kupplungsvorrichtung bekannt, bei welcher die dort vorgesehene Kupplungkugel federnd bzw. gedämpft gelagert ist.

Die der Erfindung zugrunde liegende Aufgabe wird darin gesehen, ein Anhängesystem der eingangs genannten Art anzugeben, durch welches die vorgenannten Probleme überwunden werden. Insbesondere soll das Anhängesystem geeignet sein, höhere als bisher übliche Stützlasten aufzunehmen. Des Weiteren sollen Verschleißerscheinungen minimiert und der Kuppelvorgang erleichtert werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße Anhängesystem enthält ein in vertikaler Richtung zwischen einer oberen Transportstellung und einer abgesenkten Stellung schwenkbar am Fahrzeugrumpf angelenktes Rahmenteil. Das freie, verschwenkbare Ende des Rahmenteils nimmt ein vorstehendes, unmittelbar oder mittelbar vom Rahmenteil geführtes und in wenigstens einer Fahrzeuglängsposition arretierbares Kupplungsteil auf. Es wird vorgeschlagen, dass das Kupplungsteil eine Kupplungskugel enthält.

Durch die Verwendung einer Kugel als Stützlager lassen sich die Auflageflächen gegenüber bekannten Lösungen erheblich vergrößern, so dass eine Verbesserung der Funktion (Erhöhung der zulässigen Stützlasten) erreicht wird. Die der Kupplung dienenden Kupplungsteile - Kupplungskugel und Gegenpfanne des zu kuppelnden Gerätes - lassen sich derart aufeinander abstimmen, dass sich eine im wesentlichen spielfreie Verbindung ausbildet. Damit kann auch die Zeitfestigkeit (Verbesserung des Verschleißverhaltens) erheblich verbessert werden.

Erfindungsgemäß ist die Kupplungskugel nicht an einem fest vorgegebenen Ort am Fahrzeugchassis befestigt, sondern an einem höhen- und längenverstellbaren Anhängesystem. Dies ermöglicht es, dass zum Kuppeln der Anhängevorrichtung einer Anhängerdeichsel der fahrzeugfeste Kuppelpunkt auf die jeweilige Höhe der Anhängevorrichtung eingestellt, insbesondere aus seiner verriegelbaren Grund- oder Transportstellung abgesenkt, werden kann. Hilfsmittel zum Anheben der Anhängerdeichsel sind nicht erforderlich. Des Weiteren lässt sich der Kuppelpunkt in Fahrzeuglängsrichtung so weit ausfahren, dass er von dem Fahrerplatz der Fahrzeugplattform aus sichtbar ist, was den Kuppelvorgang erheblich vereinfacht und die Mitwirkung einer zweiten Person entbehrlich macht. Es werden somit die Vorteile einer beweglichen Pick-up Hitch mit denen einer Kugelkupplung kombiniert.

Für eine gute Einsehbarkeit beim Kuppelvorgang ist es von besonderem Vorteil, die Kupplungskugel im oberen Bereich des äußersten freien Endes des Kupplungsteils anzuordnen. Insbesondere kann das sich in Fahrzeuglängsrichtung erstreckende freie Ende des Kupplungsteils in einem nach oben gekrümmten Bogen verlaufen und in einer Kupplungskugel enden.

Um hohen Kräften standhalten zu können, ohne die Bauteile übermäßig dimensionieren zu müssen, ist es vorteilhaft, das Kupplungsteil und die Kupplungskugel nicht als gesonderte Teile bereitzustellen, sondern einteilig, unlösbar mit einander verbunden auszubilden.

Eine bevorzugte Ausgestaltung der Erfindung sieht vor, dass am Kupplungsteil eine Haltevorrichtung angebracht ist, die der Arretierung des Kupplungsteils am Fahrzeugrumpf dient. Die Arretierung kann an einer unmittelbar am Fahrzeugrumpf befestigten Arretiervorrichtung oder an einer Arretiervorrichtung, die an einem am Fahrzeugrumpf befestigten Bauteil montiert ist, erfolgen.

Dabei ist es zweckmäßig, die Haltevorrichtung als eine im wesentlichen von dem Kupplungsteil nach oben vorstehende Lasche auszubilden, die eine horizontale Querausnehmung aufweist. Die Querausnehmung dient der Aufnahme eines Arretierbolzens, durch welchen sich das Anhängesystem, insbesondere das Kupplungsteil und das Rahmenteil, in der oberen Transportstellung gegenüber dem Fahrzeugrumpf arretieren lässt.

Vorzugsweise ist das Kupplungsteil mit der Kupplungskugel und gegebenenfalls mit der Haltevorrichtung als ein einteiliges Schmiedeteil ausgebildet, welches hohe Zug- und Druckkräfte aufzunehmen vermag. Die genannten Teile können jedoch auch auf andere Weise unlösbar miteinander verbunden sein.

Unmittelbar am Fahrzeugrumpf oder an einem an dem Fahrzeugrumpf befestigten Bauteil ist ein Niederhalter angeordnet, der eine auf der Kupplungskugel montierte Kupplungsvorrichtung sichert, sofern sich das Anhängesystem in Transportstellung befindet. Bei dem Niederhalter handelt es sich zweckmäßigerweise um zwei im wesentlichen parallel zueinander ausgerichtete vorstehende Laschen, die jeweils eine Querausnehmung aufweisen, die mit der Querausnehmung der Lasche der Haltevorrichtung korrespondieren, sofern das Rahmenteil und die Haltevorrichtung die Transportstellung einnehmen. Die Laschen können Arretierbolzen aufnehmen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Ansicht eines erfindungsgemäßen Anhängesystems,
- Fig. 2: eine Seitenansicht des Anhängesystems gemäß Fig. 2 und
- Fig. 3: ein Kupplungsteil mit integrierter Kupplungskugel und Befestigungslasche.

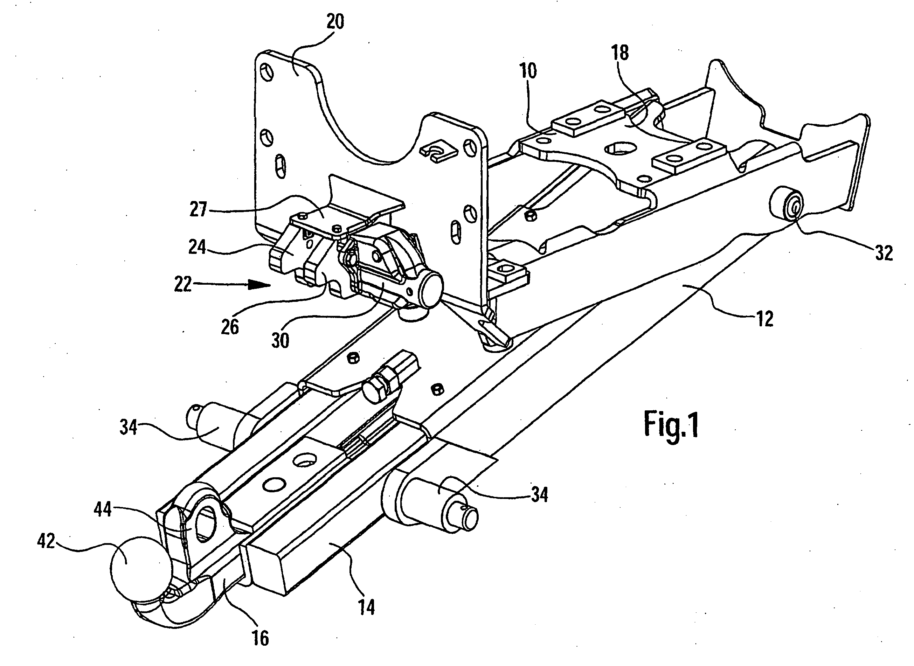

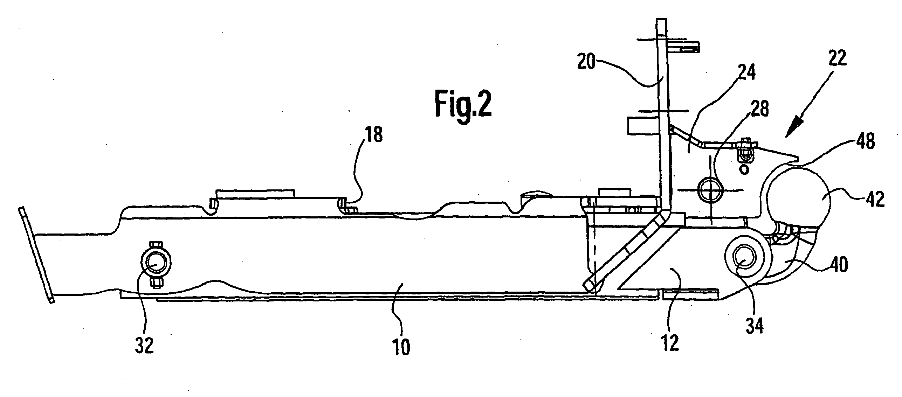

Das in den Figuren 1 und 2 dargestellte Anhängesystem besteht im wesentlichen aus einem oberen Rahmenteil 10, einem unteren Rahmenteil 12, einem Führungsteil 14 und einem Kupplungsteil 16. Das obere Rahmenteil 10 enthält Befestigungsplatten 18, 20 mit Befestigungsbohrungen, die der starren Befestigung des oberen Rahmenteils 10 an einem nicht näher dargestellten Hinterachsdifferentialgehäuse eines Ackerschleppers dienen, wobei sich die Befestigungsplatte 20 am hinteren Schlepperende befindet. Wegen der starren Befestigung kann das obere Rahmenteil 10 als Teil des Fahrzeugrumpfs angesehen werden.

Die hintere senkrecht ausgerichtete Befestigungsplatte 20 trägt einen Niederhalter 22, welcher im wesentlichen aus zwei parallel zueinander und senkrecht ausgerichteten, nach hinten vorstehenden Niederhalterlaschen 24, 26 besteht. Die durch eine Versteifungsplatte 27 abgedeckten Niederhalterlaschen 24, 26 enthalten je eine Querbohrung 28. Die Querbohrungen 28 korrespondieren miteinander und dienen der Aufnahme eines nicht näher dargestellten Arretierbolzens einer Verriegelungseinrichtung 30. Die Verriegelungseinrichtung 30 ist an der gemäß Fig. 1 rechten Niederhalterlasche 26 festgeschraubt. Es handelt sich beispielsweise um eine Arretiereinrichtung, deren Ausbildung und Funktionsweise in der EP-A-0 695 655 beschrieben wurde.

Im vorderen Bereich des oberen Rahmenteils 10 ist eine quer zur Fahrzeuglängsrichtung und horizontal ausgerichtete Schwenkachse 32 ausgebildet, an der das vordere Ende des unteren Rahmenteils 12 angelenkt ist. Im Bereich des hinteren Endes sind an dem unteren Rahmenteil zwei quer nach außen und in horizontaler Richtung ausgerichtete Bolzen 34 befestigt. An diesen Bolzen 34 lassen sich die Enden eines nicht dargestellten Hubgestänges befestigen, durch die sich das untere Rahmenteil 12 um die Schwenkachse 32 verschwenken lässt, um dessen hinteres Ende anzuheben oder abzusenken.

Das untere Rahmenteil 12 ist nach Art einer Kassette ausgebildet und enthält einen im wesentlichen rechteckigen Kanal, in dem das Führungsteil 14 in Fahrzeuglängsrichtung verschiebbar geführt ist. Zur Verschiebung des Führungsteils 14 wird ein nicht dargestellter Hydraulikzylinder verwendet, dessen eines Ende an der Schwenkachse 32 und dessen anderes Ende an dem Führungsteil 14 angreift.

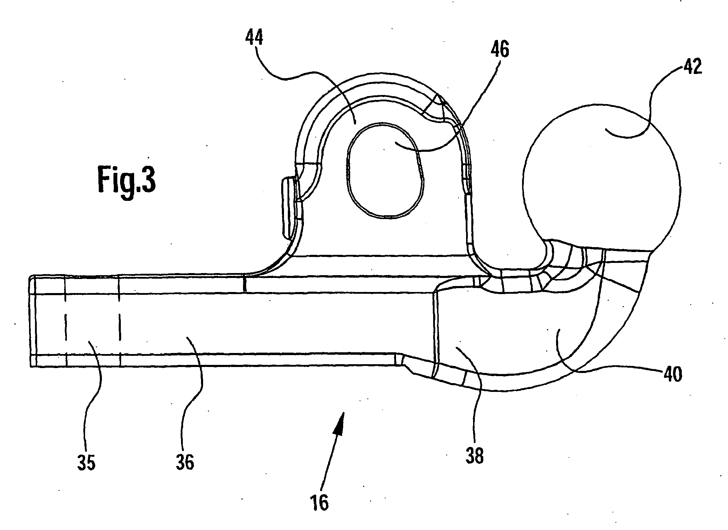

Am hinteren Ende des Führungsteils 14 ist das Kupplungsteil 16 durch wenigstens eine nicht näher dargestellte Schraube, die sich durch eine Ausnehmung 35 des Kupplungsteils 16 erstreckt, befestigt. Das Kupplungsteil 16 geht aus Fig. 3 hervor. Es enthält einen vorderen Abschnitt 36, der im wesentlichen rechteckförmig ausgebildet ist und in einen entsprechend ausgebildeten Kanal im Führungsteil 14 einführbar ist. Das hintere Ende 38 des rechteckigen Abschnitts 36 geht in einen bogenförmig ausgebildeten Kugelhals 40 über, dessen oberes Ende eine nach oben und hinten über das übrige Anhängesystem vorstehende Kupplungskugel 42 trägt. Die Kupplungskugel 42 liegt damit am äußersten hinteren Ende des Kupplungsteils 16.

Vom mittleren Bereich des Kupplungsteils 16 steht eine als Lasche 44 ausgebildete Haltevorrichtung nach oben vor, die eine quer verlaufende, horizontale Querausnehmung 46 aufweist. Wenn das Anhängesystem seine obere Transportstellung (Fig. 2) einnimmt, fluchtet die Querausnehmung 46 der Lasche 44 mit den Querbohrungen 28 in den Niederhalterlaschen 24, 26, so dass ein Sicherungsbolzen der Verriegelungseinrichtung 30 eingeführt und das Kupplungsteil 16 unmittelbar gegenüber dem fahrzeugfesten oberen Rahmenteil 10 festgelegt werden kann.

Wie aus Fig. 3 hervorgeht, hat die Ausnehmung einen leicht ovalen Querschnitt, der oben etwas enger ist als unten, wodurch das Verriegeln und Auffinden einer definierten Transportstellung erleichtert wird. Das Kupplungsteil 16 ist ein Schmiedeteil und mit der Kupplungskugel 42 und der Lasche 44 einteilig ausgebildet.

Die Kupplungskugel 42 dient der Aufnahme einer nicht dargestellten Kupplungsvorrichtung, die eine Kugelpfanne enthält, welche beispielsweise am vorderen freien Ende einer Anhängerdeichsel montiert ist. Wie aus Fig. 2 hervorgeht, weisen die Niederhalterlaschen 24, 26 in ihrem hinteren, unteren Bereich eine kreisförmige Formgebung 48 auf, die an die sphärische Oberfläche der Kupplungskugel 42 angepasst ist. Die Niederhalterlaschen 24, 26 sichern damit immer dann, wenn das Anhängesystem seine obere Transportstellung einnimmt, eine von der Kupplungskugel 42 aufgenommene Kugelpfanne. Wenn nach einem Lösen der Verriegelungseinrichtung 30 das Anhängesystem aus seiner Transportstellung nach unten verschwenkt wird, tritt die Kugelpfanne aus dem Einflussbereich der Niederhalterlaschen 24, 26 aus, so dass sie sich von der Kupplungskugel 42 abheben und lösen lässt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, wenn diese in den Schutzbereich der Patentansprüche fallen.

## Patentansprüche

1. Anhängesystem für ein landwirtschaftliches oder industrielles Fahrzeug mit einem in vertikaler Richtung zwischen einer oberen Transportstellung und einer abgesenkten Stellung schwenkbar am Fahrzeugrumpf (10) angelenkten Rahmenteil (12), dessen freies, verschwenkbares Ende ein vorstehendes, unmittelbar oder mittelbar im Rahmenteil (12) geführtes und in wenigstens einer Fahrzeuglängsposition arretierbares Kupplungsteil (16) aufnimmt,
**dadurch gekennzeichnet,**
**dass** das Kupplungsteil (16) eine Kupplungskugel (42) enthält und dass am Fahrzeugrumpf unmittelbar oder mittelbar wenigstens ein Niederhalter (22) mit Niederhalterlaschen (24, 26) zur Sicherung einer auf der Kupplungskugel (42) montierten Kupplungsvorrichtung derart angeordnet ist,
**dass** eine von einer Kupplungskugel (42) aufgenommene Kugelpfanne dann gesichert ist, wenn das Anhängesystem sich in seiner oberen Transportstellung befindet, wobei die Niederhalterlaschen (24, 26) in einem hinteren, unteren Bereich eine kreisförmige Formgebung (48) aufweisen, die an die sphärische Oberfläche der Kupplungskugel (42) angepasst ist.

2. Anhängesystem nach Anspruch 1,
**dadurch gekennzeichnet,**
**dass** die Kupplungskugel (42) sich am äußersten freien Ende des Kupplungsteils (16) nach oben erstreckt.

3. Anhängesystem nach Anspruch 1 oder 2,
**dadurch gekennzeichnet,**
**dass** das Kupplungsteil (16) und die Kupplungskugel (42) einteilig ausgebildet und unlösbar miteinander verbunden sind.

4. Anhängesystem nach einem der Ansprüche 1 bis 3,
**dadurch gekennzeichnet,**
**dass** an dem Kupplungsteil (16) eine Haltevorrichtung (44) angebracht ist, die der unmittelbaren oder mittelbaren Arretierung des Kupplungsteils (16) am Fahrzeugrumpf (10) dient.

5. Anhängesystem nach einem der Ansprüche 1 bis 4,
**dadurch gekennzeichnet,**
**dass** das Kupplungsteil (16) mit der Kupplungskugel (42) und gegebenenfalls mit der Haltevorrichtung (44) als Schmiedeteil ausgebildet ist.

6. Anhängesystem nach Anspruch 4 oder 5,
**dadurch gekennzeichnet,**
**dass** die Haltevorrichtung im wesentlichen eine nach oben vorstehende Lasche (44) mit einer horizontal ausgerichteten Querausnehmung (46) ist.

7. Anhängesystem nach Anspruch 1,
**dadurch gekennzeichnet,**
**dass** als Niederhalter (22) zwei im Wesentlichen parallel zueinander ausgerichtete vorstehende Niederhalterlaschen (24, 26) dienen, die jeweils eine Querausnehmung (28) aufweisen, die mit der Querausnehmung (46) der Lasche (44) der Haltevorrichtung korrespondieren, sofern das Rahmenteil (12) und die Haltevorrichtung die Transportstellung einnehmen.

## Claims

1. Trailer coupling system for an agricultural or industrial vehicle, with a frame part (12) coupled to the vehicle rear (10) in a manner such that it can be pivoted in the vertical direction between an upper transport position and a lowered position and the free, pivotable end of which receives a projecting coupling part (16) which is guided directly or indirectly in the frame part (12) and can be locked in at least one longitudinal position of the vehicle, **characterized in that** the coupling part (16) contains a coupling ball (42), and **in that** at least one holding-down device (22) with holding-down tabs (24, 26) for securing a coupling device fitted on the coupling ball (42) is arranged directly or indirectly on the vehicle rear in such a manner that a ball socket which is received by a coupling ball (42) is secured when the trailer coupling system is in its upper transport position, with the holding-down tabs (24, 26), in a rear, lower region, having a circular shaping (48) which is matched to the spherical surface of the coupling ball (42).

2. Trailer coupling system according to Claim 1, **characterized in that** the coupling ball (42) extends upwards at the outermost free end of the coupling part (16).

3. Trailer coupling system according to Claim 1 or 2, **characterized in that** the coupling part (16) and the coupling ball (42) are designed as a single part and are connected nonreleasably to each other.

4. Trailer coupling system according to one of Claims 1 to 3, **characterized in that** a holding device (44) which serves to directly or indirectly lock the coupling part (16) to the vehicle rear (10) is attached to the coupling part (16).

5. Trailer coupling system according to one of Claims 1 to 4, **characterized in that** the coupling part (16) is formed together with the coupling ball (42) and if appropriate with the holding device (44) as a forged part.

6. Trailer coupling system according to Claim 4 or 5, **characterized in that** the holding device is essentially an upwardly projecting tab (44) with a horizontally aligned transverse recess (46).

7. Trailer coupling system according to Claim 1, **characterized in that** two projecting holding-down tabs (24, 26) which are aligned substantially parallel to each other serve as the holding-down device (22), said holding-down tabs each having a transverse recess (28), which transverse recesses correspond to the transverse recess (46) of the tab (44) of the holding device if the frame part (12) and the holding device take up the transport position.

## Revendications

1. Système d'attelage pour un véhicule agricole ou industriel comprenant une partie de châssis (12) articulée à l'arrière du véhicule (10) de manière à pouvoir pivoter dans une direction verticale entre une position de transport supérieure et une position abaissée, dont l'extrémité libre pivotante reçoit une partie d'accouplement (16) saillante, guidée directement ou indirectement dans la partie de châssis (12) et pouvant être bloquée dans au moins une position longitudinale du véhicule,
**caractérisé en ce que**
la partie d'accouplement (16) comprend une boule d'accouplement (42) et **en ce qu'**au moins un serre-flan (22) avec des pattes de serre-flan (24, 26) pour la fixation d'un dispositif d'accouplement monté sur la boule d'accouplement (42) est disposé sur l'arrière du véhicule, de manière directe ou indirecte, de telle sorte qu'une cavité sphérique reçue par une boule d'accouplement (42) soit sécurisée lorsque le système d'attelage se trouve dans sa position de transport supérieure, les pattes de serre-flan (24, 26) présentant, dans une région arrière inférieure, une forme circulaire (48) qui est adaptée à la surface sphérique de la boule d'accouplement (42).

2. Système d'attelage selon la revendication 1,
**caractérisé en ce que**
la boule d'accouplement (42) s'étend vers le haut à l'extrémité libre extérieure de la partie d'accouplement (16).

3. Système d'attelage selon la revendication 1 ou 2,
**caractérisé en ce que**
la partie d'accouplement (16) et la boule d'accouplement (42) sont réalisées d'une seule pièce et sont connectées l'une à l'autre de manière non amovible.

4. Système d'attelage selon l'une quelconque des revendications 1 à 3,
**caractérisé en ce**
**qu'**un dispositif de retenue (44) est monté sur la partie d'accouplement (16), lequel sert à bloquer directement ou indirectement la partie d'accouplement (16) sur l'arrière du véhicule (10).

5. Système d'attelage selon l'une quelconque des revendications 1 à 4,
**caractérisé en ce que**
la partie d'accouplement (16) est réalisée avec la boule d'accouplement (42) et éventuellement avec le dispositif de retenue (44) sous forme de pièce forgée.

6. Système d'attelage selon la revendication 4 ou 5,
**caractérisé en ce que**
le dispositif de retenue est essentiellement une patte saillant vers le haut (44), avec un évidement transversal (46) orienté horizontalement.

7. Système d'attelage selon la revendication 1,
**caractérisé en ce que**
l'on utilise comme serre-flans (22) deux pattes de serre-flan (24, 26) saillantes orientées essentiellement parallèlement l'une à l'autre, qui présentent chacune un évidement transversal (28), qui correspond à l'évidement transversal (46) de la patte (44) du dispositif de retenue, lorsque la partie de châssis (12) et le dispositif de retenue adoptent la position de transport.
